# EUROPEAN PATENT SPECIFICATION

(11) **EP 1 692 798 B1**
(45) Date of publication and mention of the grant of the patent: **10.09.2008**
(21) Application number: 04814116.2
(22) Date of filing: 13.12.2004
(51) Int. Cl.: H04J 14/02

(54) **METHOD AND SYSTEM FOR COMMUNICATING OPTICAL TRAFFIC AT A NODE**
VERFAHREN UND SYSTEM ZUM ÜBERMITTELN VON OPTISCHEM VERKEHR IN EINEM KNOTEN
PROCEDE ET SYSTEME SERVANT A COMMUNIQUER UN TRAFIC OPTIQUE AU NIVEAU D'UN NOEUD

(30) Priority: 12.12.2003 US 734629
(43) Date of publication of application: 23.08.2006
(73) Proprietor: FUJITSU LIMITED, Kawasaki-shi, Kanagawa 211-8588 (JP)
(72) Inventor: KOOPFERSTOCK, Eric, S., Plano, TX 75093 (US)
(74) Representative: HOFFMANN EITLE
(86) International application number: PCT/US2004/041894
(87) International publication number: WO 2005/060136

(56) References cited:
- EP-A- 1 096 713
- WO-A-01/61903
- WO-A-03/102634
- DE-A1- 4 337 089
- US-A- 6 115 517
- US-A1- 2002 006 250
- US-B1- 6 233 074

## Description

The present invention relates generally to optical communication systems and, more particularly, to a method and system for communicating optical traffic at a node.

Telecommunications systems, cable television systems and data communication networks use optical networks to rapidly convey large amounts of information between remote points. In an optical network, information is conveyed in the form of optical signals through optical fibers. Optical fibers comprise thin strands of glass capable of transmitting the signals over long distances with very low loss.

Optical networks often employ wavelength division multiplexing (WDM) or dense wavelength division multiplexing (DWDM) to increase transmission capacity.

In WDM and DWDM networks, a number of optical channels are carried in each fiber at different wavelengths or frequencies. Network capacity can be defined based on the number of wavelengths, or channels, in each fiber, and the bandwidth, or size, of the channels.

Optical networks add and drop optical traffic at nodes on the network. Traffic may be added to the optical network at add switches or ports which may selectively pass through to other nodes optical traffic currently being communicated on the network or optical traffic desired to be added to the network from a local interface or client signal.

European patent application EP1096713, NEC Corporation, May 2, 2007, describes an optical add/drop multiplexer provided with an optical demultiplexer, an optical coupler, a 2-input/1-output optical switch and an optical multiplexer, respectively cascaded. The OADM demultiplexes a wavelength-multiplexed optical signal. The optical coupler branches a demultiplexed optical signal into first and second branched optical signals. The second branched optical signal is a drop signal. The first branched optical signal and an add signal are incident on the 2 X 1 SW. When the add signal is output from the switch, the OMUX multiplexes the add signal and other optical signals, and outputs the result to an optical transmission line as a wavelength-multiplexed optical signal.

United States Patent Application US2002/006250, Wedding. B, June 4, 2001, relates to an optical demultiplexer with at least one input and several outputs, for distributing an optical information input to the outputs. It, in addition, to an optical multiplexer with several inputs and at least one output, for linking optical information inputs to an information output. The demultiplexer and the multiplexer are of multistage design. The individual stages are connected to one another by means of optical waveguides. It is proposed to arrange between the individual stages of the demultiplexer/multiplexer optical amplifiers. (6; 16) which comprise active glass fibers or active planar waveguides doped with a metal pertaining to the rare earths and at least one energy source one energy source (being provide for several optical amplifiers.

International Patent Application WO03102634, Celion Networks Inc., December 11, 2003, describes a method and architecture for bypassing a terminal site without affecting existing traffic. An architecture for optically bypassing a terminal site comprises: an optical de-coupler; an optical bypass switch optically coupled to an output port of said optical de- coupler; an optical coupler optically coupled to an output port of said optical bypass switch.

Some embodiments of the present invention provide a method and system for communicating optical traffic at a node that substantially eliminates or reduces at least some of the disadvantages and problems associated with previous methods and systems.

According to a first aspect of the present invention, there is provided a method for communicating optical traffic at a node according to appended independent claim 1.

According to a second aspect of the present invention, there is provided a system for communicating optical traffic at a node according to appended independent claim 4.

Preferred embodiments are defined in the appended dependent claims.

For a better understanding of the invention and to show how the same may be carried into effect, reference will now be made, by way of example, to the accompanying drawings, in which:
FIGURE 1 illustrates an optical network, in accordance with one embodiment;
FIGURE 2 illustrates a node with a splitter for dropping optical traffic, in accordance with a particular embodiment;
FIGURE 3 illustrates a node with a splitter for dropping optical traffic at a demultiplexer element, in accordance with another embodiment; and
FIGURE 4 illustrates a method for communicating optical traffic' at a node, in accordance with a particular embodiment.

A method for communicating optical traffic at a node includes receiving optical traffic on a network and demultiplexing the optical traffic into component signals of the optical traffic. The method includes splitting at least one of the component signals into a drop signal and a continue signal and receiving and recovering the drop signal. The method also includes selecting between an add signal and the continue signal for communication on the network and multiplexing the selected signal with other signals for communication on the network.

Demultiplexing the optical traffic into component signals may comprise demultiplexing the optical traffic into component wavelengths, such as approximately forty component wavelengths. Demultiplexing the optical traffic may comprise demultiplexing the optical traffic at a demultiplexer card, and splitting the at least one of the component signals may comprise splitting the at least one of the component signals at the demultiplexer card. The method may also include splitting the drop signal into a first drop signal and a second drop signal, receiving the first drop signal at a work receiver and receiving the second drop signal at a protect receiver.

selecting between an add signal and the continue signal may comprise selecting between an add signal and the continue signal at a 2 x 1 switch.

A system for communicating optical traffic at a node includes a node operable to receive optical traffic on a network and a demultiplexer operable to demultiplex the optical traffic received at the node into component signals of the optical traffic. The system includes a splitter coupled to the demultiplexer. The splitter is operable to split at least one of the component signals into a drop signal and a continue signal. The system includes a receiver coupled to the splitter. The receiver is operable to receive and recover the drop signal. The system also includes a switch coupled to the splitter. The switch is operable to select between an add signal and the continue signal for communication on the network. The system includes a multiplexer coupled to the switch. The multiplexer is operable to multiplex the selected signal with other signals for communication on the network.

The demultiplexer and the splitter may be positioned upon a demultiplexer card. The splitter may be operable to split at least one of the component signals into a drop signal and a continue signal on the demultiplexer card using array waveguide technology or using thin film filters. The system may include a second splitter coupled to the splitter. The second splitter may be operable to split the drop signal into a first drop signal and a second drop signal. The system may also include a work receiver coupled to the second splitter.

The work receiver may be operable to receive the first drop signal. The system may also include a protect receiver coupled to the second splitter. The protect receiver may be operable to receive the second drop signal.

Technical advantages of particular embodiments of the present invention include a method for communicating optical traffic at a node that utiLizes a splitter to split demultiplexed optical traffic prior to the switch where traffic is added back to the network. This reduces the need for more complex switches at the same location where traffic is added back to the network and reduces interference caused by the use of such switches.

In an embodiment, dropping the traffic at a separate location from the add switch provides unique physical locations to drop and add the optical signal and further reduces the complexity of the switches utilized. Moreover, having a separate splitter from the switch facilitates dealing with failure of either of the two components. Accordingly, labor and expense incurred in manufacturing the node and its components are reduced.

Other technical advantages will be readily apparent to one skilled in the art from the following figures, description and claims. Moreover, while specific advantages have been enumerated above, various embodiments may include all, some or none of the enumerated advantages.

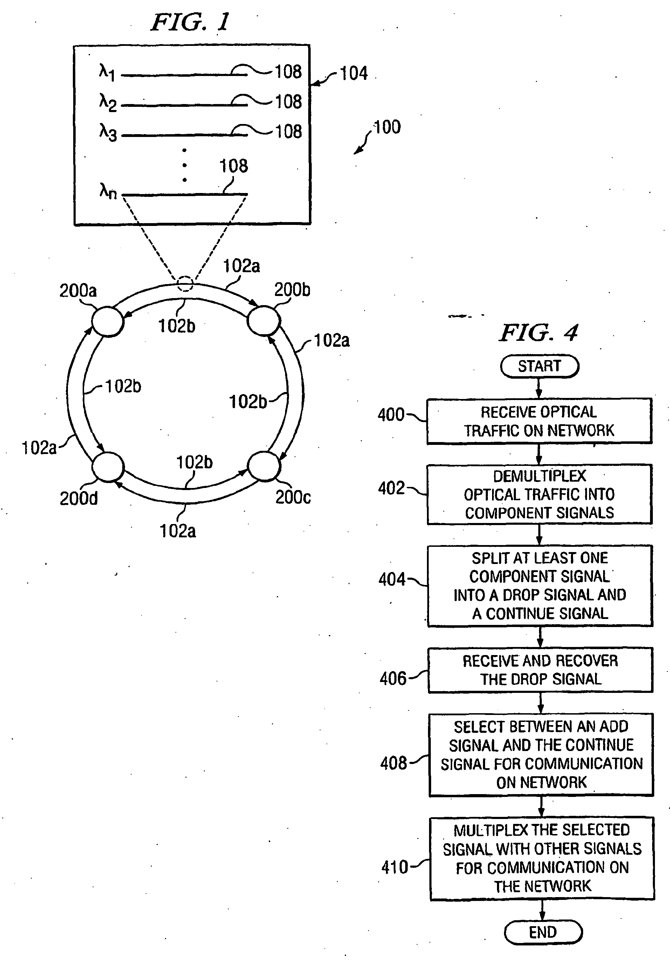

FIGURE 1 illustrates an optical network 100 that communicates information between network nodes 200 using optical links 102, in accordance witch a particular embodiment. Optical network 100 generally represents any collection of hardware and/or software that communicates information between network nodes 200 in the form of optical signals. In a particular embodiment, optical network 100 uses wavelength division multiplexing (WDM) or dense wavelength division multiplexing (DWDM) to communicate information on multiple channels, each channel using a different wavelength. Network nodes 200, referring generally to nodes 200a, 200b, 200c and 200d, represent any hardware and/or software that receives information carried in optical network 100 in the form of optical signals, processes that information in any suitable fashion, and/or communicates information to optical network 100.

Nodes 200 are each operable to passively add and drop traffic to and from links 102. In particular, each node 200 receives traffic from local clients and adds that traffic to links 102. At the same time, each node 200 receives traffic from links 102 and drops traffic destined for the local clients. As used throughout this description and the following claims, the term "each" means every one of at least a subset of the identified items. In adding and dropping traffic, nodes 200 may combine data from clients for transmittal in links 102 and may drop channels of data from links 102 for clients. Traffic may be dropped by making the traffic available for transmission to the local clients. Thus, traffic may be dropped and yet continue to circulate on a link. Nodes 200 communicate the traffic on links 102 regardless of the channel spacing of the traffic - thus providing "flexible" channel spacing in nodes 200. Nodes 200 may include multiplexers, demultiplexers, optical switches, amplifiers such as erbium doped fiber amplifiers (EDFAs), optical-electronic converters or any other suitable hardware and/or software for processing optical signals.

Links 102 represent any suitable links for communicating optical signals 104 between network nodes 200. As such, links 102 may include any manner of optical communication medium, including optical fibers such as single-mode fiber, dispersion compensation fiber, dispersion-shifted fiber, non-zero dispersion shifted fiber. Links 102 may also include any other suitable optical components, such as EDFAs, repeaters, or optical-electronic-optical (OEO) converters. Links 102 may carry information using any suitable format or protocol, including frame relay, asynchronous transfer mode (ATM), synchronous optical network (SONET), or any other suitable method of communication. Links 102 may also perform any necessary signal and/or protocol conversion necessary to communicate information between nodes 200. Links 102 may be unidirectional or bidirectional. In many networks; there is an "eastbound" path traveling clockwise around optical network 100, and a "westbound" path, which communicates information counterclockwise around optical network 100. Each link 102 may include one or multiple optical fibers or other media for communicating optical signals 104, and nodes 200 of optical network 100 may be arranged in any suitable configuration, including ring, star, linear or other suitable network configuration. In a particular embodiment, network 100 may be an Optical Unidirectional Path-Switched Ring (OUPSR) network in which traffic sent from a first node 200 to a second node 200 is communicated over both directions of links 102. The use of such dual communication allows traffic to get from one node 200 to another over at least one link 102 in the event of a line break or other damage to the other of the links 102.

In a particular embodiment, links 102 carry optical signals 104 that have a wavelength spectrum of the form shown in FIGURE 1. Digital as well as analog signals may be communicated on optical links 102. In signal 104, the optical information is apportioned in several different wavelengths 108. Each wavelength 108 represents a particular channel. Information carried on links 102 may be assigned to any particular wavelength 108 and optical signal 104. Using appropriate equipment, wavelengths 108 may be added, dropped, switched, or otherwise processed separately. Signal 104 may also include an optical supervisory channel (OSC) that represents one or more wavelengths assigned to carry information used for management of network 100. For example, the OSC may communicate status information for the channels 108 indicating whether each channel 108 is provisioned and whether there has been an error detected in communication of channel 108. Any numbers of wavelengths may be assigned to the OSC for carrying network management information.

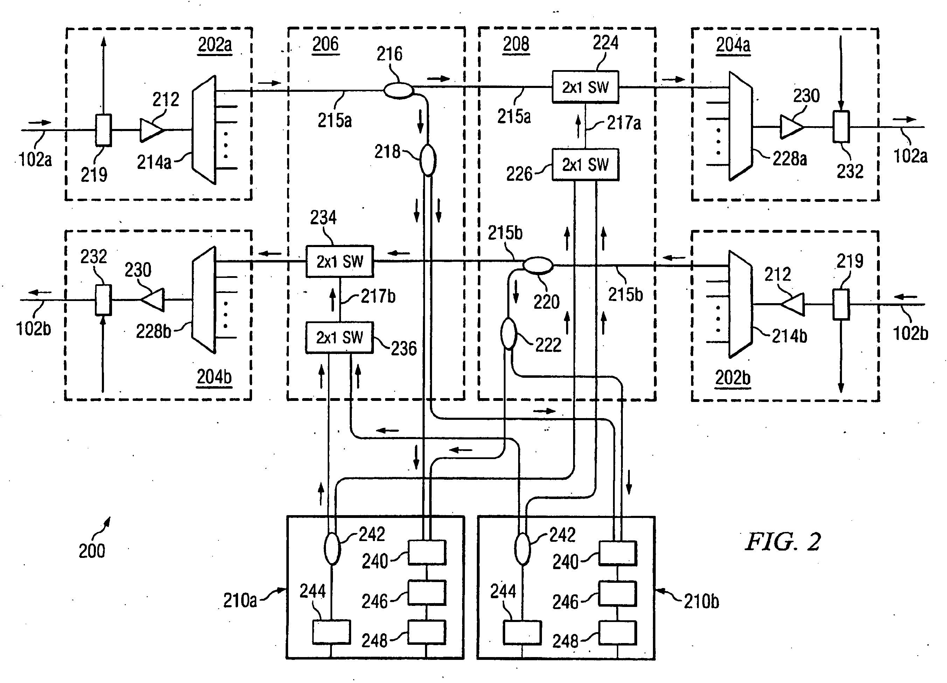

FIGURE 2 is a block diagram illustrating details of a node 200, in accordance with one embodiment. Node 200 includes demultiplexer elements 202, multiplexer elements 204, node elements 206 and 208 and transmitter/receiver elements 210. In the illustrated embodiment, node elements 206 and 208 include identical or similar components and provide similar functionality for optical traffic communicated in respective directions. In one embodiment, elements 202, 204, 206, 208 and 210, as well as components within the elements, may be interconnected with optical fiber links. Interconnection may occur at an optical backplace in particular embodiments. -Any other suitable connections may alternatively be used. In addition, such elements may each be implemented as one or more discrete cards or plug in units within a card shelf of node 200. Connectors may be used in a card shelf embodiment to allow efficient and cost effective replacement of failed components.

Demultiplexer elements 202 each include an optional amplifier 212 and a demultiplexer 214. Demultiplexer elements 202 each receive optical traffic from an optical link 102 coupled to node 200. In the illustrated embodiment, demultiplexer elements 202a receives optical traffic traveling along optical link 102a in one direction, and demultiplexer element 202b receives optical traffic traveling along optical link 102b in the other direction. Demultiplexers 214 demultiplex the optical traffic received into its constituent wavelengths or channel. In particular embodiments, demultiplexers 214 may demultiplex optical traffic into forty separate channels. It should be understood that while the illustrated embodiment specifically shows what happens to optical traffic of one channel demultiplexed onto optical links 215a and 215b at demultiplexers 214a and 214b, respectively, optical traffic in other channels demultiplexed onto optical links may encounter similar components and undergo similar action. As illustrated, demultiplexer elements 202 each also include OSC taps 219 to split the OSC signal before encountering demultiplexers 214.

Traffic traveling along optical link 215a encounters node element 206 after demultiplexer element 202a, and traffic traveling along optical link 215b encounters node element 208 after demultiplexer element 202b. At node element 206, traffic traveling along optical 1 ink 215a encounters a splitter 216 which allows for traffic along optical link 215a to be dropped to another splitter 218 and also continued to node element 208. As used herein, the term "splitter" may comprise any suitable coupler, splitter, tap, combiner or other element able to receive one or more input optical signals and either split or combine the input optical signal(s) into one or more output optical signals. In the illustrated embodiment, splitter 216 comprises a drop coupler that passively splits the signal from the demultiplexer element into two generally identical signals: a through signal that is forwarded to another node element and a drop signal that is forwarded to the associated transmitter / receiver element. The split signals are copies in that they are identical or substantially identical in content, although power and/or energy levels may differ. In particular embodiments the drop signal may comprise approximately ten percent of the power of the original signal entering the splitter; however, in other embodiments the drop signal may comprise another percentage of the power of the original signal.

Traffic from splitter 218 travels to transmitter/receiver elements 210a and 210b. It should be understood that other embodiments may utilize other components, such as a switch, in place of splitter 218. Particular embodiments may not include multiple transmitter/receiver elements 210, in which case splitter 218 may not be implemented or used.

Traffic continuing along optical link 215a from splitter 216 continues to node element 208 where it encounters a 2 x 1 optical switch 224. Optical switch 224 is operable to select traffic from either optical link 215a or optical link 217a to continue to multiplexer element 204a. Traffic from optical link 217a may comprise add signals that a user desires to add to the network from transmitter/receiver elements 210. Traffic on optical link 217a comes from a 2 x 1 switch 226 coupled to both transmitter/receiver elements 210. Switch 226 selects traffic transmitted from either transmitter/receiver element 210a or 210b to continue along optical link 217a. As indicated above, particular embodiments may not include multiple transmitter/receiver elements 210, in which case 2 x 1 switch 226 may not be implemented or used. It should be understood that switches of particular embodiments, including switch 224 and switch 234 discussed below, are reconfigurable in that their states may be changed to pass through an add signal or the continued signal according to particular needs. For example, if a user desires to add to the network a signal in the channel demultiplexed onto optical link 215a, then the user may change the operation of switch 224 to pass through the add signal on optical link 217a to multiplexer 228a.

Traffic selected to pass through switch 224 continues to multiplexer 228a of multiplexer element 204a where the traffic is multiplexed with other optical traffic in other channels or wavelengths into one traffic stream. Multiplexer element 204a also includes an optional amplifier 230 and an OSC tap 232 where the OSC signal is added back to optical link 102a.

In a similar manner but opposite direction to traffic along optical link 215a from demultiplexer 214a, demultiplexed traffic in one channel traveling along optical link 215b encounters splitter 220 which drops a copy of such traffic to another splitter 222. It should be understood that other embodiments may utilize other components, such as a switch, in place of splitter 222. Traffic from splitter 222 travels to transmitter/receiver elements 210a and 210b. As indicated above, particular embodiments may not include multiple transmitter/receiver elements 210, in which case splitter 222 may not be implemented or used.

Traffic continuing along optical link 215b from splitter 220 continues to node element 206 where it encounters a 2 x 1 optical switch 234. Optical switch 234 is operable to select traffic from either optical link 215b or optical link 217b to continue to multiplexer element 204b. Traffic on optical link 217b comes from a 2 x 1 switch 236 coupled to both transmitter/receiver elements 210. Switch 236 selects traffic transmitted from either transmitter/receiver element 210a or 210b to continue along optical link 217b. As indicated above, particular embodiments may not include multiple transmitter/receiver elements 210, in which case 2 x 1 switch 236 may not be implemented or used.

Traffic selected to pass through switch 234 continues to multiplexer 228b of multiplexer element 204b where the traffic is multiplexed with other optical traffic in other channels or wavelengths into one traffic stream. Multiplexer element 204b also includes an optional amplifier 230 and an OSC tap 232 where the OSC signal is added back to optical link 102b.

Transmitter/receiver elements 210 each include a switch 240, a distributing splitter 242, a transmitter 244, a filter 246 and a receiver 248. Transmitter/receiver elements 210 each transmit locally-derived add traffic from local clients, subscribers, another network, or any other appropriate source to optical links 102 and each receive from optical links 102 locally-destined drop traffic for local clients, subscribers, another network or any other appropriate destination. Two transmitter/receiver elements 210 are illustrated to add work and protect functionality to node 200 (one may act as a work transmitter/receiver while the other acts as a protect transmitter/receiver). Transmitter/receiver elements 210 handle traffic for optical links 215a and 215b. Other transmitter/receiver elements may be utilized for traffic in other channels carried on other optical links between demultiplexer elements 202 and multiplexer elements 204. It should be understood that transmitter/receiver elements described herein with respect to various embodiments may be located on other equipment and at other locations from other components described herein.

Switches 240 each receive optical traffic from optical links 215a and 215b and selectively pass one received traffic stream for receipt at filters 246. Filters 246 may be implemented such that each filter allows la different channel to be forwarded to its associated receiver 248. Distributing splitters 242 distribute copies of optical traffic transmitted from transmitters 244 to optical links 215a and 215b for communication on optical links 102a and 102b. It should be understood that transmitter/receiver elements in other embodiments may include other types of optical components for transmitting and receiving optical traffic to and from an optical network.

As illustrated and discussed above, the demultiplexed traffic traveling along optical link 215a is dropped at splitter 216 of node element 206. The splitting of such traffic prior to switch 224 where traffic is added back to the network via transmitter/receiver elements 210 reduces the need for more complex switches at the same location where traffic is added back to the network and reduces interference caused by the use of such switches. For example, using a 2 x 2 optical switch in place of 2 x 1 switch 224 to provide both add and drop functionality in a single switch can add interference and other problems within the network. However, dropping the traffic at a separate location from the add switch provides unique physical locations to drop and add the optical signal and further reduces the complexity of the switches utilized. Moreover, as discussed above a passive drop coupler may be used to drop the signal allowing the remaining signal to be used for pass through applications.

As discussed above, switch 224 is operable to select between traffic added from one of transmitter/receiver elements 210 or demultiplexed traffic along optical link 215a for continuation to multiplexer 228a. If a client desires to add and drop traffic at node 200 (via transmitter/receiver elements 210) in the same channel as the demultiplexed traffic traveling along optical link 215a, then switch 224 may be set to allow traffic from optical link 217a to pass through to multiplexer 228a for communication along the network. However, if no client traffic is being added in the same channel as the demultiplexed traffic traveling along optical link 215a, then switch 224 may be set to allow the traffic traveling along optical link 215a to continue to multiplexer 228a for communication along the optical network.

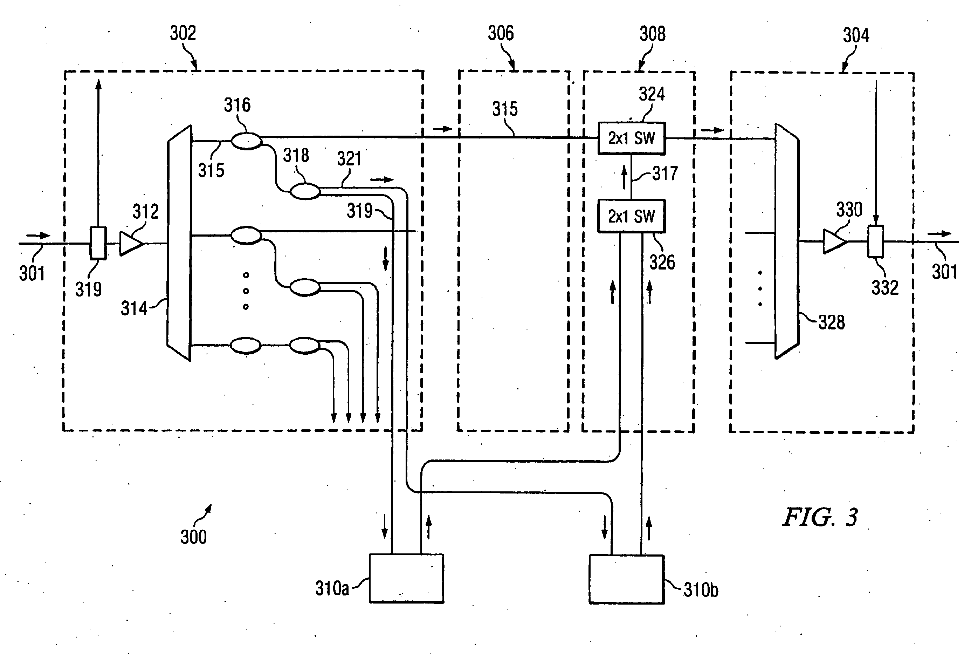

FIGURE 3 is a block diagram illustrating details of a node 300, in accordance with one embodiment. Node 300 includes demultiplexer element 302, multiplexer element 304, node elements 306 and 308 and transmitter/receiver elements 310. For ease of illustration, node 300 is illustrated as coupled to optical link 301 carrying optical traffic in one direction; however node 300 may also be coupled to an optical link carrying optical traffic in the opposite direction. Node 300 may include other components for adding and dropping optical traffic to and from the optical link carrying traffic in the opposite direction as the traffic carried by optical link 301.

Demultiplexer element 302 includes an optional amplifier 312, a demultiplexer 314 and an OSC tap 319 to split the OSC signal before encountering demultiplexer 314. As is the case with node 200 of FIGURE 2, node 300 of FIGURE 3 illustrates what happens to optical traffic of one channel demultiplexed onto optical link 315. Optical traffic in other channels demultiplexer onto optical links may encounter similar components and undergo similar action.

Optical traffic demultiplexed onto optical link 315 encounters a splitter 316 which in the illustrated embodiment passively drops and continues the optical traffic. Splitter 316 is similar in functionality to splitter 216 of node 200 of FIGURE 2; however splitter 316 is located on demultiplexer element 302 of node 300 instead of on a separate node element or switch card. In particular embodiments, splitters 316 may be implemented on demultiplexer element 302 using array waveguide technology, using thin film filters or using other technology or components.

The traffic dropped at splitter 316 is split at splitter 318 for communication to both transmitter/receiver elements 310. Particular embodiments may not include multiple transmitter/receiver elements in which case splitter 318 may not be implemented or utilized.

The continued traffic from splitter 316 passes through to 2 x 1 switch 324 at node element 308. Optical switch 324 is operable to select traffic from either optical link 315 or optical link 317 to continue to multiplexer element 304. Traffic on optical link 317 comes from a 2 x 1 switch 326 coupled to both transmitter/receiver elements 310. Switch 326 selects traffic transmitted from either transmitter/receiver element 310a or 310b to continue along optical link 317. As indicated above, particular embodiments may not include multiple transmitter/receiver elements 310, in which case 2 x 1 switch 326 may not be implemented or utilized.

Traffic selected to pass through switch 324 continues to multiplexer 328 of multiplexer element 304 where the traffic is multiplexed with other optical traffic in other channels or wavelengths into one traffic stream. Multiplexer element 304 also includes an optional amplifier 330 and an OSC tap 332 where the OSC signal is added back to optical link 301.

Node 300 may also include additional similar components for adding and dropping traffic communicated in a direction opposite from the traffic communicated on optical link 301. Moreover, node 300 may include additional components for handling traffic in demultiplexed channels other than the channel or wavelength communicated on optical link 315 from demultiplexer 314. Transmitter/receiver elements 310 may be similar in functionality to, and include similar components as, transmitter/receiver elements 210 of FIGURE 2.

As discussed above, node 300 is similar to node 200 of FIGURE 2 except that demultiplexed traffic is dropped at the demultiplexer element (using switch 316) instead of at a subsequent node element or card. However, node 300 provides similar advantages to node 200 of FIGURE 2 in that the dropping of optical traffic prior to switch 324 where traffic is added back to the network reduces the need for more complex switches at the same location where traffic is added back to the network and reduces interference caused by the use of such switches. Dropping the traffic at a separate location from the add switch also provides unique physical locations to drop and add the optical signal.

FIGURE 4 is a flowchart illustrating a method for communicating optical traffic at a node, in accordance with a particular embodiment. The method begins at step 400 where optical traffic is received at a node on a network. At step 402, the optical traffic is demultiplexed into component signals, for example component wavelengths or channels. In particular embodiments, the optical traffic may be demultiplexed into approximately forty component wavelengths with approximately 100 GHz spacing.

At step 404, at least one of the component signals is split into a drop signal and a continue signal at a splitter. The drop signal may comprise approximately ten percent of the power of the continue signal. At step 406, the drop signal is received and recovered for use at a client. In particular embodiments, the drop signal may be further split and communicated to both a work receiver and a protect receiver, wherein the protect receiver is used in the event of failure of the work receiver. In some embodiments, the protect receiver may be used as a secondary receiver in parallel with the work receiver instead of merely in the event of failure of the work receiver. At step 408, a switch selects between an add signal and the continue signal for communication on the network. It should be understood that the splitting of at least one of the component signals into a drop signal and a continue signal of step 404 may take place on the same card or plug in unit as the demultiplexing of step 402. Such splitting of step 404 may also take place on a card or plug in unit located between a card or plug in unit where the demultiplexing of step 402 takes places and the card or plug in unit where the switch selection of step 408 takes place. At step 410, the selected signal is multiplexed with other signals for communication on the network.

Some of the steps illustrated in FIGURE 4 may be combined, modified or deleted where appropriate, and additional steps may also be added to the flowchart.

Additionally, steps may be performed in any suitable order without departing from the scope of the invention.

Although the present invention has been described in detail with reference to particular embodiments, it should be understood that various other changes, substitutions, and alterations may be made hereto without departing from the scope of the present invention. For example, although the present invention has been described with reference to a number of components included within switch cards and other node elements, other and different components may be utilized to accommodate particular needs. The present invention contemplates great flexibility in the arrangement of these elements as well as their internal components.

## Claims

1. A method for communicating optical traffic at a node (200a-200d, 200, 300), comprising:
receiving optical traffic (104, 102a, 102b, 301) on a network (100);
demultiplexing the optical traffic into component signals of the optical traffic;
splitting at least one of the component signals into a drop signal (319;321) and a continue signal (215a, 215b, 315);
receiving and recovering the drop signal;
selecting between an add signal (217a, 317) and the continue signal for communication on the network; and
multiplexing the selected signal with other signals for communication on the network,
**characterised in that**:
demultiplexing the optical traffic comprises demultiplexing the optical traffic at a demultiplexer card (202a, 202b, 302);
splitting the at least one of the component signals comprises splitting the at least one of the component signals at the demultiplexer card (202a, 202b, 302);
selecting between an add signal and the continue signal comprises selecting between an add signal and the continue signal at a 2 x 1 switch (224, 234, 324) at a separate location (208, 308) not on the demultiplexer card; and
splitting the at least one of the component signals at the demultiplexer card (202a, 202b, 302) comprises splitting the at least one of the component signals at the demultiplexer card using array waveguide technology or thin film filters.

2. The method of Claim 1, wherein demultiplexing the optical traffic (104, 102a, 102b, 301) into component signals comprises demultiplexing the optical traffic into component wavelengths (108).

3. The method of Claim 2, wherein demultiplexing the optical traffic (104, 102a, 102b, 301) into component wavelengths (108) comprises demultiplexing the optical traffic into approximately forty component wavelengths.

4. A system for communicating optical traffic at a node (200a-200d, 200, 300), comprising:
a node (200a-200d, 200, 300) operable to receive optical traffic (104) on a network (100):
a demultiplexer (214a, 214b, 314) operable to demultiplex the optical traffic received at the node into component signals of the optical traffic;
a splitter (216, 220, 316) coupled to the demultiplexer, the splitter operable to split at least one of the component signals into a drop signal (319,321) and a continue signal (215a, 215b, 315);
a receiver (248, 310a, 310b) coupled to the splitter, the receiver operable to receive and recover the drop signal;
a switch (224, 234, 324) coupled to the splitter, the switch operable to select between an add signal (217a. 317) and the continue signal (215a, 215b, 315) for communication on the network; and
a multiplexer (228a, 228b, 328) coupled to the switch, the multiplexer operable to multiplex the selected signal with other signals for communication on the network,
**characterised in that**:
the system comprises a demultiplex and (202a, 202b, 302);
the demultiplexer (214a, 214b, 314) and the splitter (216, 220, 316) are positioned upon the demultiplexer card (202a, 202b, 302);
the switch (224, 234, 324) comprises a 2 x 1 switch positioned at a separate location (208, 308) not on the demultiplexer card; and
the splitter (216, 220, 316) is operable to split at least one of the component signals (108) into a drop signal and a continue signal on the demultiplexer card using array waveguide technology or thin film filters.

5. The system of Claim 4, wherein the demultiplexer (214a, 214b, 314) operable to demultiplex the optical traffc (104) into component signals comprises a demultiplexer operable to demultiplex the optical traffic into component wavelengths (108).

6. The system of Claim 5, wherein the demultiplexer (314) operable to demultiplex the optical traffic (104) into component wavelengths comprises a demultiplexer operable to demultiplex the optical traffic into approximately forty component wavelengths (108).

## Patentansprüche

1. Ein Verfahren zum Übermitteln von optischen Verkehr bei einem Knoten (200a-200d, 200, 300), umfassend:
Empfangen von optischen Verkehr (104, 102a, 102b, 301) auf einem Netzwerk (100);
Demultiplexen des optischen Verkehrs in Teilsignale des optischen Verkehrs;
Aufteilen von zumindest einem der Teilsignale in ein Entnahme-Signal (319; 321) und ein Fortsetzen-Signal (215a, 215b, 315);
Empfangen und Wiederherstellen des Entnahme-Signals;
Auswählen zwischen einem Hinzufüge-Signal (217a, 317) und dem Fortsetzen-Signal für Übermittlung auf dem Netzwerk; und
Multiplexen des ausgewählten Signals mit anderen Signalen für Übermittlung auf dem Netzwerk,
**dadurch gekennzeichnet, dass**:
Demultiplexen des optischen Verkehrs Demultiplexen des optischen Verkehrs bei einer Demultiplexer-Karte (202a, 202b, 302) umfasst;
Aufteilen des mindestens einen der Teilsignale Aufteilen des mindestens einen der Teilsignale bei der Demultiplexer-Karte (202a, 202b, 302) umfasst; Auswählen zwischen einem Hinzufüge-Signal und dem Fortsetzen-Signal Auswählen zwischen einem Hinzufüge-Signal und dem Fortsetzen-Signal bei einem 2 x 1 Schalter (224, 234, 324) an einem separaten Ort (208, 308), der sich nicht auf der Demultiplexer-Karte befindet, umfasst; und
Aufteilen des mindestens einen der Teilsignale bei der Demultiplexer-Karte (202a, 202b, 302) Aufteilen des mindestens einen der Teilsignale bei der Demultiplexer-Karte unter Verwendung von Array-Wellenleiter-Technologie oder Dünnschichtfilter umfasst.

2. Das Verfahren nach Anspruch 1, wobei Demultiplexen des optischen Verkehrs (104, 102a, 102b, 301) in Teilsignale Demultiplexen des optischen Verkehrs in Teilwellenlängen (108) umfasst.

3. Das Verfahren nach Anspruch 2, wobei Demultiplexen des optischen Verkehrs (104, 102a, 102b, 301) in Teilwellenlängen (108) Demultiplexen des optischen Verkehrs in näherungsweise vierzig Teilwellenlängen umfasst.

4. Ein System zum Übermitteln von optischen Verkehr bei einem Knoten (200a-200d, 200, 300), umfassend:
einen Knoten (200a-200d, 200, 300), der betriebsfähig ist zum Empfangen von optischem Verkehr (104) auf einem Netzwerk (100);
einen Demultiplexer (214a, 214b, 314), der betriebsfähig ist zum Demultiplexen des optischen Verkehrs, der bei dem Knoten empfangen wird, in Teilsignale des optischen Verkehrs;
einen Splitter (216, 220, 316), der mit dem Demultiplexer gekoppelt ist, wobei der Splitter betriebsfähig ist zum Aufteilen von zumindest einem der Teilsignale in ein Entnahme-Signal (319; 321) und ein Fortsetzen-Signal (215a, 215b, 315);
einen Empfänger (248, 310a, 310b), der mit dem Splitter gekoppelt ist, wobei der Empfänger betriebsfähig ist zum Empfangen und Wiederherstellen des Entnahme-Signals;
einen Schalter (224, 234, 324), der mit dem Splitter gekoppelt ist, wobei der Schalter betriebsfähig ist zum Auswählen zwischen einem Hinzufüge-Signal (217a, 317) und dem Fortsetzen-Signal (215a, 215b, 315) für Übermittlung auf dem Netzwerk; und
einen Multiplexer (228a, 228b, 328), der mit dem Splitter gekoppelt ist, wobei der Multiplexer betriebsfähig ist zum Multiplexen des ausgewählten Signals mit anderen Signalen für Übermittlung auf dem Netzwerk,
**dadurch gekennzeichnet, dass**
das System eine Demultiplexer-Karte (202a, 202b, 302) umfasst;
der Demultiplexer (214a, 214b, 314) und der Splitter (216, 220, 316) auf der Demultiplexer-Karte (202a, 202b, 302) positioniert sind;
der Schalter (224, 234, 324) einen 2 x 1 Schalter umfasst, der an einem separaten Ort (208, 308) positioniert ist, der sich nicht auf der Demultiplexer-Karte befindet; und
der Splitter (216, 220, 316) betriebsfähig ist zum Aufteilen von mindestens einem der Teilsignale (108) in ein Entnahme-Signal und ein Fortsetzen-Signal auf der Demultiplexer-Karte unter Verwendung von Array-Wellenleiter-Technologie oder Dünnschichtfiltern.

5. Das System nach Anspruch 4, wobei der Demultiplexer (214a, 214b, 314), der betriebsfähig ist zum Demultiplexen des optischen Verkehrs (104) in Teilsignale, einen Demultiplexer umfasst, der betriebsfähig ist zum Demultiplexen des optischen Verkehrs in Teilwellenlängen (108).

6. Das System nach Anspruch 5, wobei der Demultiplexer (314), der betriebsfähig ist zum Demultiplexen des optischen Verkehrs (104) in Teilwellenlängen, einen Demultiplexer umfasst, der betriebsfähig ist zum Demultiplexen des optischen Verkehrs in näherungsweise vierzig Teilwellenlängen (108).

## Revendications

1. Procédé destiné à communiquer un trafic optique à un noeud (200a-200d, 200, 300), comprenant :
la réception d'un trafic optique (104, 102a, 102b, 301) sur un réseau (100) ;
le démultiplexage du trafic optique en signaux composants du trafic optique ;
la séparation d'au moins l'un des signaux composants en un signal d'abandon (319 ; 321) et un signal de poursuite (215a, 215b, 315) ;
la réception et la récupération du signal d'abandon ;
la sélection d'un signal d'ajout (217a, 317) ou du signal de poursuite pour la communication sur le réseau ; et
le multiplexage du signal sélectionné avec d'autres signaux pour la communication sur le réseau,
**caractérisé en ce que** :
le démultiplexage du trafic optique comprend le démultiplexage du trafic optique au niveau d'une carte de démultiplexeur (202a, 202b, 302) ;
la séparation de l'au moins un des signaux composants comprend la séparation de l'au moins un des signaux composants au niveau de la carte de démultiplexeur (202a, 202b, 302) ;
la sélection d'un signal d'ajout ou du signal de poursuite comprend la sélection d'un signal d'ajout ou du signal de poursuite au niveau d'un commutateur 2 x 1 (224, 234, 324) au niveau d'un emplacement séparé (208, 308) ne se trouvant pas sur la carte de démultiplexeur ; et
la séparation de l'au moins un des signaux composants au niveau de la carte de démultiplexeur (202a, 202b, 302) comprend la séparation de l'au moins un des signaux composants au niveau de la carte de démultiplexeur en utilisant d'une technologie de guide d'ondes de matrice ou des filtres à film mince.

2. Procédé de la Revendication 1, dans laquelle le démultiplexage du trafic optique (104, 102a, 102b, 301) en signaux composants comprend le démultiplexage du trafic optique en longueurs d'ondes composantes (108).

3. Procédé de la Revendication 2, dans laquelle le démultiplexage du trafic optique (104, 102a, 102b, 301) en longueurs d'ondes composantes (108) comprend le démultiplexage du trafic optique en environ quarante longueurs d'ondes composantes.

4. Système destiné à communiquer un trafic optique à un noeud (200a-200d, 200, 300), comprenant :
un noeud (200a-200d, 200, 300) servant à recevoir du trafic optique (104) sur un réseau (100) ;
un démultiplexeur (214a, 214b, 314) servant à démultiplexer le trafic optique reçu au niveau du noeud en signaux composants du trafic optique ;
un séparateur (216, 220, 316) couplé au démultiplexeur, le séparateur servant à séparer au moins l'un des signaux composants en un signal d'abandon (319, 321) et un signal de poursuite (215a, 215b, 315) ;
un récepteur (248, 310a, 310b) couplé au séparateur, le récepteur servant à recevoir et récupérer le signal d'abandon ;
un commutateur (224, 234, 324) couplé au séparateur, le commutateur servant à sélectionner un signal d'ajout (217a, 317) ou le signal de poursuite (215a, 215b, 315) pour la communication sur le réseau ; et un multiplexeur (228a, 228b, 328) couplé au commutateur, le multiplexeur servant à multiplexer le signal sélectionné avec d'autres signaux pour la communication sur le réseau,
**caractérisé en ce que** :
le système comprend une carte de démultiplexeur (202a, 202b, 302) ;
le démultiplexeur (214a, 214b, 314) et le séparateur (216, 220, 316) sont positionnés sur la carte de démultiplexeur (202a, 202b, 302) ;
le commutateur (224, 234, 324) comprend un commutateur 2 x 1 positionné à un endroit séparé (208, 308) ne se trouvant pas sur la carte de démultiplexeur ; et
le séparateur (216, 220, 316) servant à séparer au moins l'un des signaux composants (108) en un signal d'abandon et un signal de poursuite sur la carte de démultiplexeur en utilisant d'une technologie de guide d'ondes de matrice ou des filtres à film mince.

5. Système de la Revendication 4, dans lequel le démultiplexeur (214a, 214b, 314) servant à démultiplexer le trafic optique (104) en signaux composants comprend un démultiplexeur servant à démultiplexer le trafic optique en longueurs d'ondes composantes (108).

6. Système de la Revendication 5, dans lequel le démultiplexeur (314) servant à démultiplexer le trafic optique (104) en longueurs d'ondes composantes comprend un démultiplexeur servant à démultiplexer le trafic optique en environ quarante longueurs d'ondes composantes (108).
